# EUROPEAN PATENT APPLICATION

(11) **EP 2 469 867 A2**
(43) Date of publication of application: **27.06.2012**
(21) Application number: 11192541.8
(22) Date of filing: 08.12.2011
(51) Int. Cl.: H04N 13/00

(54) **Image processing apparatus and image processing method**

(30) Priority: 22.12.2010 JP 2010286716
(71) Applicant: Sony Corporation, Tokyo 108-0075 (JP)
(72) Inventor: Ikeda, Kiyoshi, Minato-ku, Tokyo 108-0075 (JP)
(74) Representative: Davies, Simon Robert

(57) **Abstract**

An image processing apparatus generating a multi-viewpoint image includes a parallax detection unit that receives only one of a plurality of actually-taken images including a left-eye image and a right-eye image and detects parallax of the received image so as to generate a parallax map, a first pseudo three-dimensional image generation unit that receives the left-eye image and generates one or more externally-provided or internally-provided images, based on the parallax map generated by the parallax detection unit, a first delay unit that receives the left-eye image and outputs the left-eye image with elapse of delay time, a second pseudo three-dimensional image generation unit that receives the right-eye image and generates one or more externally-provided or internally-provided images, based on the parallax map, and a second delay unit that receives the right-eye image and outputs the right-eye image with elapse of delay time.

## Description

The present technology relates to an image processing apparatus and an image processing method for processing a signal of an image which can be three-dimensionally viewed by a viewer.

A 3D image which can be three-dimensionally viewed can be provided to an observer by displaying images having parallax to right and left eyes of the observer. It has been expected that a 3D image technique is applied to various fields such as television broadcast, movies, telecommunication, and telemedicine.

For example, a time-division stereoscopic image display system that is composed of a combination of a display device and 3D glasses has already been widespread (For example, refer to Japanese Unexamined Patent Application Publication No. 2010-21731). The display device displays a left-eye image and a right-eye image which have parallax alternately on a screen in a particularly short cycle. The 3D glasses have shutter mechanisms which are liquid crystal lenses, for example, and provided to a left-eye part and a right-eye part respectively. However, the following inconveniences have been pointed out: 3D glasses of the number of persons who watch contents at the same time should be provided, a person who usually wears glasses has to further wear 3D glasses on the glasses, eyestrain is easily caused by long-time viewing, and a viewed image changes in accordance with a move of a viewpoint of a viewer. In addition, it is troublesome to carry shutter glasses as well when we would like to enjoy 3D images on portable information equipment such as a portable disk reproduction device which performs reproduction processing of a disk in which 3D video contents are recorded.

Accordingly, research and development of a naked-eye 3D image technique which does not use 3D glasses, that is, which can provide a three-dimensional image for naked eyes have been expected. Images of an object which is taken from a plurality of direction, that is, from multiple viewpoints are acquired and respective pixels of these images are discretely arranged so as to generate one composite image, enabling a naked-eye viewer to percept a three-dimensional image. For example, a stereoscopic image display apparatus that prevents image quality degradation in a near view region which is popped toward a front direction from a display surface when an actually-taken three-dimensional image is displayed is proposed (For example, refer to Japanese Unexamined Patent Application Publication No. 2010-226500).

An image which is three-dimensionally viewed is basically an actually-taken two-viewpoint image which is composed of a left-eye image and a right-eye image which are obtained by actually taking an object respectively by a left-eye camera and a right-eye camera. In contrast, if the number of viewpoints is increased as four viewpoints or eight viewpoints, for example, and parallax images which are taken from larger number of directions are combined, a more natural three-dimensional image can be viewed not only from the front but also from wider viewpoints.

Commonly, a multi-viewpoint image is composed of images which are actually taken from multiple viewpoints by a plurality of cameras (multi-viewpoint cameras) which are arranged in an array fashion. However, the number of multi-viewpoint cameras is increased in accordance with the increase of the number of viewpoints, so that the cost of contents production including shooting is increased and a data amount of the contents is increased disadvantageously. In addition, the increase of the data amount causes increase of memory, increase of a circuit scale, and the like when 3D images are dealt in portable information equipment such as a portable disk reproduction apparatus, deteriorating portability.

Various respective aspects and features of the invention are defined in the appended claims. Combinations of features from the dependent claims may be combined with features of the independent claims as appropriate and not merely as explicitly set out in the claims.

The approach described herein helps to provide a superior image processing apparatus and a superior image processing method by which a multi-viewpoint image for obtaining a three-dimensional image which can be three-dimensionally viewed with naked eyes can be favorably processed.

Further, the approach described herein helps to provide a superior image processing apparatus and a superior image processing method by which a multi-viewpoint image can be processed with smaller memory capacity and smaller circuit scale.

According to an embodiment of the present invention, there is provided an image processing apparatus generating a multi-viewpoint image, including a parallax detection unit configured to receive only one of a plurality of actually-taken images including a left-eye image taken by a left-eye camera and a right-eye image taken by a right-eye camera and detect parallax of the received image so as to generate a parallax map, a first pseudo three-dimensional image generation unit configured to receive the left-eye image taken by the left-eye camera and generate one or more externally-provided or internally-provided images that are taken by a camera externally or internally provided to the left-eye camera, based on the parallax map generated by the parallax detection unit, a first delay unit configured to receive the left-eye image taken by the left-eye camera and output the left-eye image with elapse of delay time that corresponds to time during which the first pseudo three-dimensional image generation unit generates one of the externally-provided images and the internally-provided images, a second pseudo three-dimensional image generation unit configured to receive the right-eye image taken by the right-eye camera and generate one or more externally-provided or internally-provided images that are taken by a camera externally or internally provided to the right-eye camera, based on the parallax map generated by the parallax detection unit, and a second delay unit configured to receive the right-eye image taken by the right-eye camera and output the right-eye image with elapse of delay time that corresponds to time during which the second pseudo three-dimensional image generation unit generates one of the externally-provided images and the internally-provided images.

According to another embodiment of the present invention, the image processing apparatus of the above embodiment may further include an image composition unit configured to discretely arrange respective pixels of the generated images of multiple viewpoints so as to compose a three-dimensional image.

According to still another embodiment of the present invention, there is provided an image processing method generating a multi-viewpoint image, including detecting parallax from only one of a plurality of actually-taken images including a left-eye image taken by a left-eye camera and a right-eye image taken by a right-eye camera so as to generate a parallax map, generating one or more externally-provided or internally-provided images that are taken by a camera externally or internally provided to the left-eye camera, from the left-eye image taken by the left-eye camera, based on the parallax map that is generated in detecting parallax, outputting the left-eye image taken by the left-eye camera with elapse of delay time that corresponds to time during which one of the externally-provided images and the internally-provided images is generated in generating one or more externally-provided or internally-provided images from the left-eye image, generating one or more externally-provided or internally-provided images that are taken by a camera externally or internally provided to the right-eye camera, from the right-eye image taken by the right-eye camera, based on the parallax map that is generated in detecting parallax, and outputting the right-eye image taken by the right-eye camera with elapse of delay time that corresponds to time during which one of the externally-provided images and the internally-provided images is generated in generating one or more externally-provided or internally-provided images from the right-eye image.

According to various embodiments of the present invention, a superior image processing apparatus and a superior image processing method by which a multi-viewpoint image for obtaining a three-dimensional image which can be three-dimensionally viewed with naked eyes can be favorably processed can be provided.

According to various embodiments of the present invention, a superior image processing apparatus in which a circuit for generating a multi-viewpoint image from left and right actually-taken images is configured to have a smaller circuit scale and smaller memory capacity can be provided.

The present approach can be used in an image processing apparatus and an image processing method for processing an image which is pseudo-3D-generated so as to obtain a three dimensional image which can be viewed with naked eyes.

Embodiments of the invention will now be described with reference to the accompanying drawings, throughout which like parts are referred to by like references, and in which:
Fig. 1 schematically illustrates the functional configuration of an image processing circuit that generates four viewpoints by pseudo 3D generation from a left-eye image L and a right-eye image R which are respectively acquired by an actual take by a left-eye camera and a right-eye camera;
Fig. 2 schematically illustrates the functional configuration of another image processing circuit that generates four viewpoints by pseudo 3D generation from a left-eye image L and a right-eye image R which are respectively acquired by an actual take by a left-eye camera and a right-eye camera;
Fig. 3A illustrates a system of multi-viewpoint conversion processing in which images of two viewpoints are converted into images of four viewpoints by using the pseudo 3D generation; and
Fig. 3B illustrates a system of multi-viewpoint conversion processing in which images of two viewpoints are converted into images of four viewpoints by using the pseudo 3D generation.

Various embodiments of the present invention are now described in detail with reference to the accompanying drawings.

If one composite image is generated by discretely arranging respective pixels of images of multiple viewpoints, a viewer with naked eyes can percept a three-dimensional image. In the embodiment of the present technology described below, only a left-eye image and a right-eye image which are respectively acquired by a left-eye camera and a right-eye camera are used as actually-taken images and pseudo 3D generation processing is applied to these actually-taken images so as to obtain an externally-provided image and multi-viewpoint-convert the images of two viewpoints.

Here, the pseudo 3D generation processing indicates that depth (parallax) information is obtained from still images taken on two viewpoints for images respectively taken by a left-eye camera and a right-eye camera so as to falsely generate images of multiple viewpoints. Processing respectively performed to the left-eye image and the right-eye image is similar to 2D/3D conversion in which depths of respective objects in a two-dimensional image are estimated so as to convert the image into a pseudo three-dimensional video image.

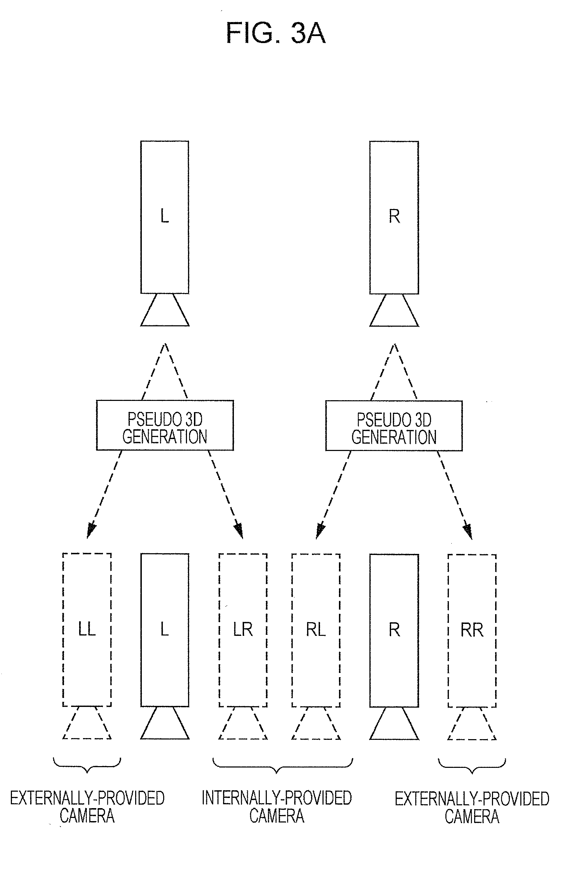

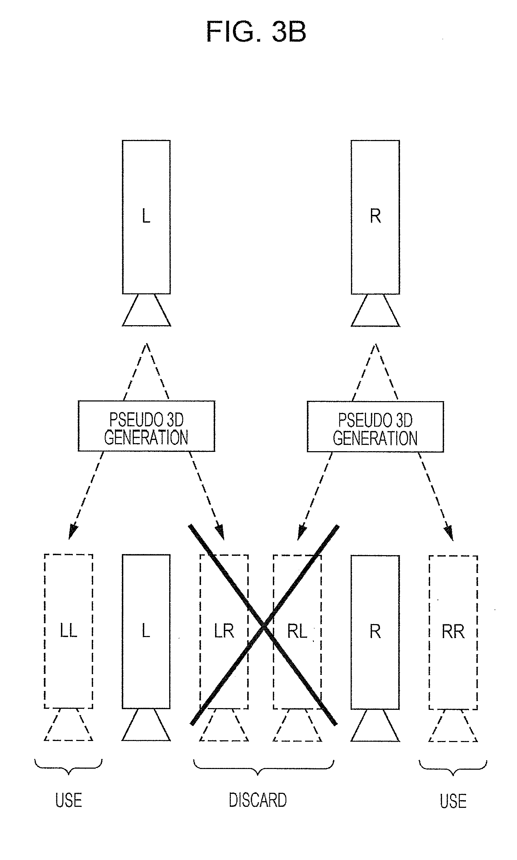

Figs. 3A and 3B schematically illustrate a system of multi-viewpoint conversion processing in which images of two viewpoints are converted into images of four viewpoints by using pseudo 3D generation.

Referring to Fig. 3A, "L" and "R" are respectively real left-eye camera and right-eye camera and a left-eye actually-taken image L and a right-eye actually-taken image R can be obtained from respective cameras.

By applying pseudo 3D conversion to the left-eye image L which is actually taken by the left-eye camera, an externally-provided image "(LL) left-left" which is taken from a pseudo camera externally provided to the left-eye camera L mentioned above and an internally-provided image "(LR) left-right" which is taken from a pseudo camera internally provided to the left-eye camera L can be obtained.

Further, by applying pseudo 3D conversion to the right-eye image R which is actually taken by the right-eye camera, an externally-provided image "(RR) right-right" which is taken from a pseudo camera externally provided to the right-eye camera R mentioned above and an internally-provided image "(RL) right-left" which is taken from a pseudo camera internally provided to the right-eye camera R can be obtained.

Here, intervals of respective cameras LL, L, LR, RL, R, and RR may be uniform.

Thus, by applying the pseudo 3D generation to respective two-dimensional images which are actually taken by two cameras on the right and the left, six viewpoints including two externally-provided images LL and RR and two internally-provided images LR and RL can be generated. Here, right and left parallax of the internally-provided images LR and RL which are acquired from the two pseudo internally-provided cameras may be converted, so that the internally-provided images LR and RL are not used in generation of a three-dimensional image in the following stage but are discarded (refer to Fig. 3B). Accordingly, camera viewpoints for four cameras are generated from actually-taken images of two cameras.

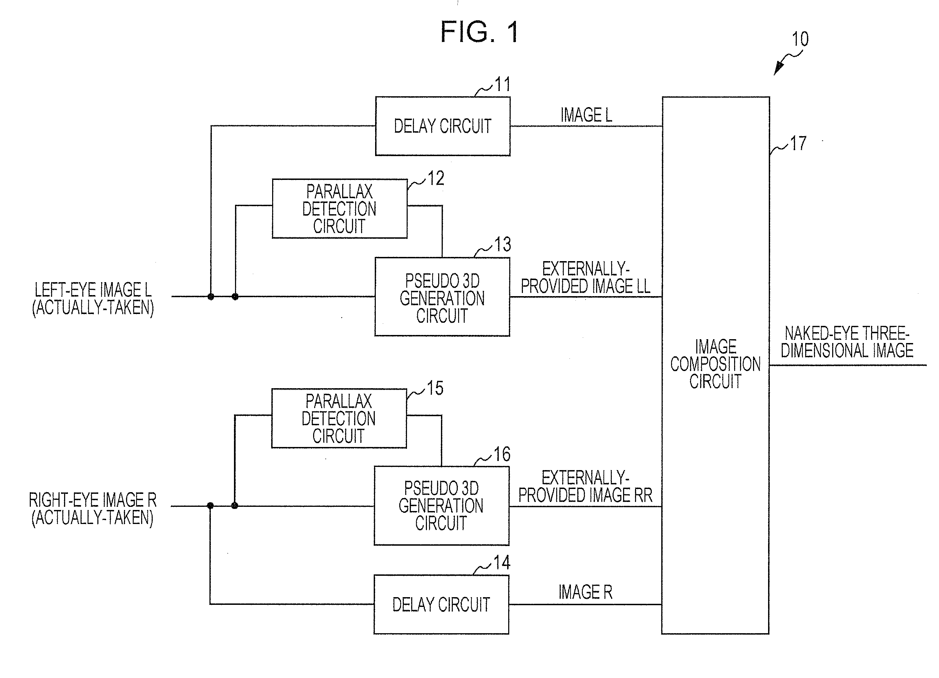

Fig. 1 schematically illustrates the functional configuration of an image processing circuit 10 that generates four viewpoints by pseudo 3D generation from a left-eye image L and a right-eye image R which are respectively acquired by an actual take by a left-eye camera and a right-eye camera.

To the image processing circuit 10 shown in Fig. 1, actually-taken images of two viewpoints which are the left-eye image L actually taken by the left-eye camera and the right-eye image R actually taken by the right-eye camera are inputted.

When a parallax detection circuit 12 receives the left-eye image L, the parallax detection circuit 12 detects depths, that is, parallax of respective pixels and generates a parallax map for one image frame, for example, so as to output the parallax map to a pseudo 3D generation circuit 13.

The pseudo 3D generation circuit 13 generates an externally-provided image from an actual-taken image based on parallax information. Namely, when the pseudo 3D generation circuit 13 receives the left-eye image L, the pseudo 3D generation circuit 13 generates an externally-provided image LL which seems to be taken by a pseudo camera externally provided to the left-eye camera L, based on the above-mentioned parallax map. As the processing of the pseudo 3D generation, enhancement such as enhancing a left edge based on the parallax information is applied, for example, so as to generate the image LL which seems to be taken by the pseudo camera externally provided to the left-eye camera L.

When a delay circuit 11 receives the left-eye image L, the delay circuit 11 outputs the left-eye image L with elapse of delay time during which the pseudo 3D generation circuit 13 generates the externally-provided image LL from the left-eye image L and outputs the image LL.

On the other hand, when a parallax detection circuit 15 receives the right-eye image R, the parallax detection circuit 15 detects depths, that is, parallax of respective pixels and generates a parallax map for one image frame, for example, so as to output the parallax map to a pseudo 3D generation circuit 16.

When the pseudo 3D generation circuit 16 receives the right-eye image R, the pseudo 3D generation circuit 16 generates an image RR which seems to be taken by a pseudo camera externally provided to the right-eye camera R, based on the above-mentioned parallax map. As the processing of the pseudo 3D generation, enhancement such as enhancing a right edge based on the parallax information is applied, for example, so as to generate the image RR which seems to be taken by the pseudo camera externally provided to the right-eye camera R.

When a delay circuit 14 receives the right-eye image R, the delay circuit 14 outputs the right-eye image R with elapse of delay time during which the pseudo 3D generation circuit 16 generates the externally-provided image RR from the right-eye image R and outputs the image RR.

When an image composition circuit 17 receives the above-described images L, LL, RR, and R of four viewpoints, the image composition circuit 17 discretely arranges respective pixels of these images based on a predetermined rule so as to generate and output one composite image. The image composition circuit 17 can arbitrarily arrange pixels perform pixel arrangement accompanying parallax adjustment. However, the arrangement method of pixels of respective viewpoint images is not directly related to the substance of embodiments of the present technology, so that its detailed description is not shown in this specification.

The composite image obtained by the image composition circuit 17 is outputted to a screen of a display device such as a liquid crystal display, as a 3D image which can be three-dimensionally viewed by naked eyes. Alternatively, the composite image is stored in a recording medium after undergoing predetermined signal processing such as encoding.

The image processing circuit 10 shown in Fig. 1 has such configuration that the two pseudo 3D generation circuits 13 and 16 are arranged in parallel so as to generate four pieces of parallax data. Further, the image processing circuit 10 includes the parallax detection circuits 12 and 15 which respectively perform parallax detection processing with respect to the left-eye image L and the right-eye image R so as to generate parallax maps, and the pseudo 3D generation circuits 13 and 16 respectively generate externally-provided images LL and RR by using the parallax maps separately generated from the left-eye image L and the right-eye image R respectively.

Thus, the parallax detection circuit 12 for the left-eye image L and the parallax detection circuit 15 for the right-eye image R have to be separately provided, increasing the circuit scale disadvantageously. Further, a memory for storing the parallax maps respectively generated by the parallax detection circuits 12 and 15 should be provided for each image, increasing memory capacity as well. When it is considered that an image processing circuit is mounted on portable information equipment which is demanded to be small and light, to have small memory capacity, and to consume less power, a circuit scale and memory capacity are bottlenecks.

Accordingly, as described herein, parallax detection is performed with respect to only either one of the left-eye image L and the right-eye image R and an obtained parallax map is used in both cases generating an externally-provided image LL and generating an externally-provided image RR so as to realize reduction of the circuit scale and reduction of memory capacity.

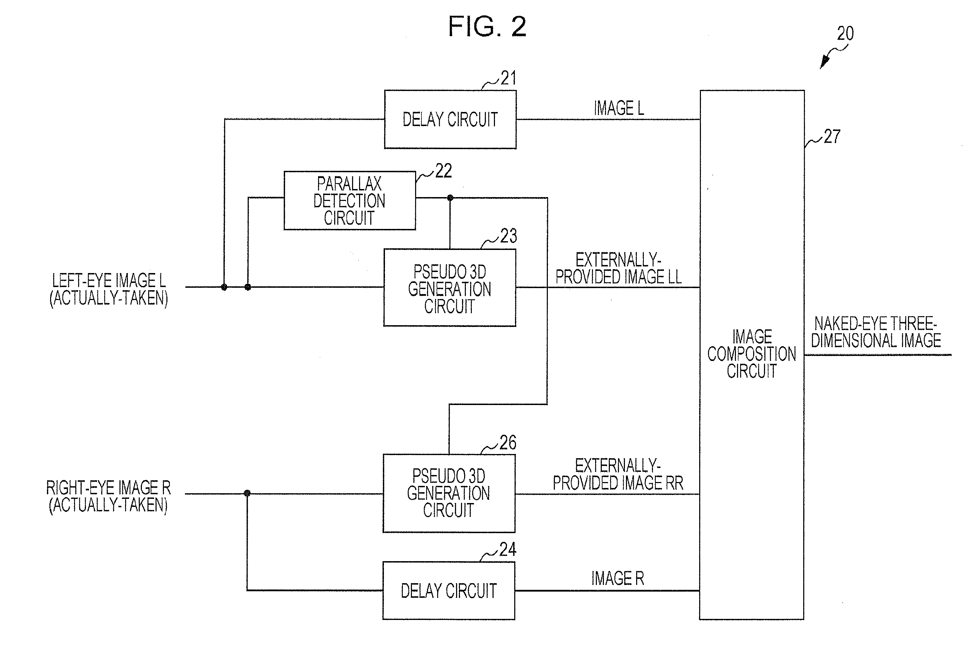

Fig. 2 illustrates a configuration example of an image processing circuit 20 realizing reduction of the circuit scale and reduction of memory capacity.

To the image processing circuit 20 shown in Fig. 2, actually-taken images of two viewpoints which are a left-eye image L actually taken by a left-eye camera and a right-eye image R actually taken by the right-eye camera are inputted.

When a parallax detection circuit 22 receives the left-eye image L, the parallax detection circuit 22 detects depths, that is, parallax of respective pixels and generates a parallax map for one image frame, for example, so as to output the parallax map to each of a pseudo 3D generation circuit 23 and a pseudo 3D generation circuit 26.

When the pseudo 3D generation circuit 23 receives the left-eye image L, the pseudo 3D generation circuit 23 generates an externally-provided image LL which seems to be taken by a pseudo camera externally provided to the left-eye camera L, based on the parallax map generated by the parallax detection circuit 22.

When a delay circuit 21 receives the left-eye image L, the delay circuit 21 provides outputs the left-eye image L with elapse of delay time during which the pseudo 3D generation circuit 23 generates the externally-provided image LL from the left-eye image L and outputs the image LL.

When the other pseudo 3D generation circuit 26 receives the right-eye image R, the pseudo 3D generation circuit 26 generates an externally-provided image RR which seems to be taken by a pseudo camera externally provided to the right-eye camera R, based on the parallax map generated by the parallax detection circuit 22, in a similar manner.

When a delay circuit 24 receives the right-eye image R, the delay circuit 24 outputs the right-eye image R with elapse of delay time during which the pseudo 3D generation circuit 26 generates the externally-provided image RR from the right-eye image R and outputs the image RR.

When an image composition circuit 27 receives the above-described images L, LL, RR, and R on four viewpoints, the image composition circuit 27 discretely arranges respective pixels of the externally-provided images based on a predetermined rule so as to generate and output one composite image. The image composition circuit 27 can arbitrarily perform parallax adjustment (same as above).

Here, the example shown in Fig. 2 employs such configuration that the parallax detection circuit 22 receives the left-eye image L to generate the parallax map and the parallax map is used in both of the pseudo 3D generation circuits 23 and 26 on the left and the right. However, such configuration that the right-eye image R is inputted and a parallax map which is used in both left and right pseudo 3D generation is generated may be employed.

According to the circuit configuration shown in Fig. 2, each of the number of parallax detection circuits and the number of memories for holding the parallax map can be reduced to one, enabling reduction of the circuit scale.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

It should be understood by those skilled in the art that various modifications, combinations, sub-combinations and alterations may occur depending on design requirements and other factors insofar as they are within the scope of the appended claims or the equivalents thereof.

## Claims

1. An image processing apparatus generating a multi-viewpoint image, comprising:
a parallax detection unit configured to receive only one of a plurality of actually-taken images including a left-eye image taken by a left-eye camera and a right-eye image taken by a right-eye camera and detect parallax of the received image so as to generate a parallax map;
a first pseudo three-dimensional image generation unit configured to receive the left-eye image taken by the left-eye camera and generate one or more externally-provided or internally-provided images that are taken by a camera externally or internally provided to the left-eye camera, based on the parallax map generated by the parallax detection unit;
a first delay unit configured to receive the left-eye image taken by the left-eye camera and output the left-eye image with elapse of delay time that corresponds to time during which the first pseudo three-dimensional image generation unit generates one of the externally-provided images and the internally-provided images;
a second pseudo three-dimensional image generation unit configured to receive the right-eye image taken by the right-eye camera and generate one or more externally-provided or internally-provided images that are taken by a camera externally or internally provided to the right-eye camera, based on the parallax map generated by the parallax detection unit; and
a second delay unit configured to receive the right-eye image taken by the right-eye camera and output the right-eye image with elapse of delay time that corresponds to time during which the second pseudo three-dimensional image generation unit generates one of the externally-provided images and the internally-provided images.

2. The image processing apparatus according to Claim 1, further comprising:
an image composition unit configured to discretely arrange respective pixels of the generated images of multiple viewpoints so as to compose a three-dimensional image.

3. An image processing method generating a multi-viewpoint image, comprising:
detecting parallax from only one of a plurality of actually-taken images including a left-eye image taken by a left-eye camera and a right-eye image taken by a right-eye camera so as to generate a parallax map;
generating one or more externally-provided or internally-provided images that are taken by a camera externally or internally provided to the left-eye camera, from the left-eye image taken by the left-eye camera, based on the parallax map that is generated in detecting parallax;
outputting the left-eye image taken by the left-eye camera with elapse of delay time that corresponds to time during which one of the externally-provided images and the internally-provided images is generated in generating one or more externally-provided or internally-provided images from the left-eye image;
generating one or more externally-provided or internally-provided images that are taken by a camera externally or internally provided to the right-eye camera, from the right-eye image taken by the right-eye camera, based on the parallax map that is generated in detecting parallax; and
outputting the right-eye image taken by the right-eye camera with elapse of delay time that corresponds to time during which one of the externally-provided images and the internally-provided images is generated in generating one or more externally-provided or internally-provided images from the right-eye image.
